# EUROPEAN PATENT SPECIFICATION

(11) **EP 3 174 339 B1**
(45) Date of publication and mention of the grant of the patent: **15.08.2018**
(21) Application number: 14881498.1
(22) Date of filing: 18.09.2014
(51) Int. Cl.: H04W 36/30, H04W 48/18, H04W 60/00

(54) **NETWORK ACCESS METHOD, UE AND COMPUTER STORAGE MEDIUM**
NETZWERKZUGRIFFSVERFAHREN, BENUTZERGERÄT UND COMPUTERSPEICHERMEDIUM
PROCÉDÉ D'ACCÈS AU RÉSEAU, UE ET SUPPORT DE STOCKAGE INFORMATIQUE

(30) Priority: 24.07.2014 CN 201410356996
(43) Date of publication of application: 31.05.2017
(73) Proprietor: ZTE Corporation, Shenzhen, Guangdong 518057 (CN)
(72) Inventor: YANG, Hui, Shenzhen Guangdong 518057 (CN)
(74) Representative: HGF Limited
(86) International application number: PCT/CN2014/086856
(87) International publication number: WO 2015/117324

(56) References cited:
- EP-A2- 2 475 213
- WO-A1-2013/135320
- US-A1- 2014 162 632
- US-A1- 2014 177 429
- 3gpp: "3rd Generation Partnership Project; Technical Specification Group Core Network and Terminals; Non-Access-Stratum (NAS) protocol for Evolved Packet System (EPS); Stage 3 (Release 12)", 3rd Generation Partnership Project (3GPP 3GPP TS 24.301 V12.5.0:'', 1 January 2014 (2014-01-01), pages 137-138, XP055219177, Retrieved from the Internet: URL:www.3gpp.org [retrieved on 2015-10-08]
- TECHNICAL SPECIFICATION GROUP CORE NETWORK AND TERMINALS.: 'Non-Access-Stratum (NAS) protocol for Evolved Packet System (EPS); Stage 3 (Release 12).' 3RD GENERATION PARTNERSHIP PROJECT (3GPP).3GPP TS 24.301 V12.5.0:'' 30 June 2014, pages 137 - 138, XP055219177

## Description

### Technical Field

The present invention relates to the technical field of communication, and particularly to a network access method and User Equipment (UE) for preventing unavailability of user services caused by frequent cell reselections, and a computer storage medium.

### Background

Along with development of a communication network technology, a core network of a Long Term Evolution (LTE) system only reserves a Packet Switched (PS) domain, called an Evolved Packet Core (EPC) network, and the EPC network mainly includes three logical entities, i.e. a Mobility Management Entity (MME), a Serving Gateway (S-GW) and a Packet Data Network Gateway (PGW). A radio access network of an LTE system is an Evolved Universal Terrestrial Radio Access Network (E-UTRAN). In addition, UE may also access an EPC network through a Global System for Mobile Communications (GSM)/Enhanced Date Rate for GSM Evolution (EDGE) Radio Access Network (GERAN) or a Universal Terrestrial Radio Access Network (UTRAN). An LTE system includes an E-UTRAN.

At present, an operating company provides a voice service for a user through a Circuit Switched (CS) domain, herein a core network of the CS domain mainly includes a Mobile Switching Center (MSC). In order to provide a circuit voice service for UE in an E-UTRAN, an SGs interface is introduced between an MME and the MSC. Under such an architecture, the UE initiates an Evolved Packet System (EPS) Mobility Management (EMM) combined flow in the E-UTRAN at first. By a Combined attach flow, the UE simultaneously performs registration of EPS service and non-EPS service, and by the combined flow, the MME and the MSC create an SGs association for the UE. When the UE makes a voice call or communicates with a Short Messaging Service (SMS) short message, the SGs association may be adopted for implementation.

At present, operators are all at a mixed network deployment stage, that is, 4G/3G/2G coexist in the same area, so interoperations frequently occur between InterRATs, for example, a cell reselection operation. Frequently, UE is located in a 3G network at first, the UE may reselect a 4G cell instead of a 3G cell when a 3G signal gets weak and 4G signal gets strong during movement, and after reselection is completed, the UE resides in the 4G cell, and may initiate a combined Tracking Area Updating (TAU) procedure. However, because of a network side, the TAU procedure may not succeed. For example, unreachability of an MSC, a network side failure or a network side congestion may cause a failure of the TAU procedure (the failure of the TAU procedure mentioned here refers to that the combined TAU procedure is successful for an EPS service, but is unsuccessful for a non-EPS service).

In the 3rd Generation Partnership Project (3GPP), it is specified that: for a TAU procedure failure cause #16 (MSC temporarily not reachable) or #17 (Network failure) or #22 (Congestion), a counter for TAU procedure tries may be internally started, a T3411 timer may be started if the counter is smaller than 5, and after a timeout of the timer, a TAU procedure may be reinitiated, and meanwhile, 1 is added to the counter; and if the counter is equal to 5, a 3G or 2G cell is required to be selected for residing. But, a 3GPP protocol does not definitely specify operations after residing in the 3G or 2G cell.

However, if signals of the 3G cell selected at this moment are still weak, the UE may still perform a cell reselection operation for reselecting to an LTE cell according to a cell reselection principle and an LTE cell list in an SIB19 message, and because of a problem of the network side, the TAU procedure may fail again. After such repetitions, the UE may be in an out-of-service state for a long term, which causes unavailability of user services and very poor user experiences.

The document EP2475213A2 describes apparatuses and methods for handling mobility management back-offs.

The document US20140177429A1 describes methods for reducing congestion in a wireless communications system.

The document 3GPP TS 24.301 V12.5.0 describes Non-Access-Stratum protocol for EPS.

The document US20140162632A1 describes methods for selecting an inter-radio access technology for an electronic device.

### Summary

In view of this, embodiments of the present invention is intended to provide a network access method and UE for preventing unavailability of user services caused by frequent cell reselections.

The embodiment of the present invention provides a method according to claim 1, a UE according to claim 5 and a computer storage medium according to claim 9. Further improvements and embodiments are provided in the dependent claims.

Also provided is a network access method, including:
initiating, by a User Equipment, UE, a Tracking Area Updating, TAU, procedure to a second-system network cell when the UE performs a reselection operation from a first-system network cell to the second-system network cell;
selecting, by the UE, to access the first-system network cell when the TAU procedure fails and the number of initiation times of the TAU procedure reaches a threshold value;
adding a first preset value to a value of a second counter which is started, wherein the second counter is arranged to record the number of times for which the number of initiation times of the TAU procedure reaches the threshold value; and
after time of a product of the value of the second counter and a value of a second timer, performing, by the UE, the reselection operation from the first-system network cell to the second-system network cell again if a cell reselection operation condition is met.

Alternatively, before the step of initiating, by the UE, the TAU procedure at an interval to the second-system network cell, the method further includes:
receiving, by the UE, a System Information Block, SIB19, message after accessing the first-system network cell, wherein the SIB19 message comprises a cell reselection message;
measuring, by the UE, signal quality of the second-system network cell according to the cell reselection message; and
performing, by the UE, the reselection operation from the first-system network cell to the second-system network cell when the signal quality of the second-system network cell is higher than a measurement threshold value.

Alternatively, the method further includes:
resetting the value of the second counter after the UE successfully initiates the TAU procedure.

Alternatively, values of the second timer are a set which at least comprises a first set time length and a second set time length, and the first set time length is smaller than the second set time length;
when a value of a first counter is smaller than a first set value, the value of the second timer adopts the first set time length; and
when the value of the first counter is larger than or equal to the first set value, the value of the second timer adopts the second set time length.

Alternatively, before the step of selecting, by the UE, to access the first-system network cell when the TAU procedure fails and the number of initiation times of the TAU procedure reaches the threshold value, the method further includes:
starting a first counter, wherein a value of the first counter is equal to the number of initiation times of the TAU procedure;
starting a first timer when the TAU procedure fails and the value of the first counter is smaller than a threshold value; and
re-initiating, by the UE, the TAU procedure if the first timer times out; adding a second preset value to the value of the first counter, and repeating the previous step.

Also provided is a UE for accessing a network, which includes:
an initiation module, arranged to initiate a Tracking Area Updating, TAU, procedure to a second-system network cell when the UE performs a reselection operation from a first-system network cell to the second-system network cell;
an access module, arranged to select to access the first-system network cell when the TAU procedure fails and the number of initiation times of the TAU procedure reaches a threshold value;
a calculation module, arranged to add a first preset value to a value of a second counter which is started, wherein the second counter is arranged to record the number of times for which the number of initiation times of the TAU procedure reaches the threshold value; and
a reselection operation module, arranged to, after time of a product of the value of the second counter and a value of a second timer, perform, by the UE, the reselection operation from the first-system network cell to the second-system network cell again if a cell reselection operation condition is met.

Alternatively, the UE further includes:
a receiving module, arranged to receive a System Information Block, SIB19, message after accessing the first-system network cell, wherein the SIB19 message comprises a cell reselection message;
a measurement module, arranged to measure signal quality of the second-system network cell according to the cell reselection message;
the reselection operation module, further arranged to perform the reselection operation from the first-system network cell to the second-system network cell when the signal quality of the second-system network cell is higher than a measurement threshold value.

Alternatively, the UE further includes:
a resetting module, arranged to reset the value of the second counter after the UE successfully initiates the TAU procedure.

Alternatively, values of the second timer are a set which at least comprises a first set time length and a second set time length, and the first set time length is smaller than the second set time length;
when a value of a first counter is smaller than a first set value, the value of the second timer adopts the first set time length; and
when the value of the first counter is larger than or equal to the first set value, the value of the second timer adopts the second set time length.

Alternatively, the UE further includes:
a counter starting module, arranged to start a first counter, wherein a value of the first counter is equal to the number of initiation times of the TAU procedure;
a timer starting module, arranged to start a first timer when the TAU procedure fails and the value of the first counter is smaller than a threshold value;
the initiation module, further arranged to re-initiate the TAU procedure when the first timer times out; and, the calculation module, arranged to add a second preset value to the value of the first counter.

Also provided is a computer storage medium, computer-executable instructions are stored in the computer storage medium, and the computer-executable instructions are arranged to execute at least one of the methods in the first
aspect of the embodiment of the present invention.

According to the network access method and UE disclosed by the embodiments of the present invention, the second counter and the second timer are introduced, and the UE may reside in a previous-system network cell (such as a 3G or 2G cell) to perform user services for a period of time after the TAU procedure fails, and then tries to perform the TAU procedure in the second-system cell (such as a 4G cell), thereby avoiding the problem that user services are unavailable because the UE is in a no service state for a long time, which is caused by frequent cell reselections due to failure of the TAU procedure.

### Brief Description of Drawings

FIG. 1 is a flowchart of a first network access method according to an embodiment of the present invention;
FIG. 2 is a flowchart of a second network access method according to an embodiment of the present invention;
FIG. 3 is a flowchart of a third network access method according to an embodiment of the present invention;
FIG. 4 is a flowchart of a fourth network access method according to an embodiment of the present invention;
FIG. 5 is a flowchart of a fifth network access method according to an embodiment of the present invention;
FIG. 6 is a structure diagram of a first UE for accessing a network according to an embodiment of the present invention;
FIG. 7 is a structure diagram of a second UE for accessing a network according to an embodiment of the present invention;
FIG. 8 is a structure diagram of a third UE for accessing a network according to an embodiment of the present invention; and
FIG. 9 is a structure diagram of a fourth UE for accessing a network according to an embodiment of the present invention.

### Detailed Description

Alternative embodiments of the present invention will be described below with reference to the drawings in detail, and it should be understood that the alternative embodiments described below are only adopted to describe and explain the present invention and not intended to limit the present invention.

A method of the embodiment of the present invention includes that: UE starts a second timer when selecting to access a first-system network cell after a TAU procedure fails, the second counter being arranged to record a number of times for which a number A1 of initiation times of the TAU procedure reaches a threshold value; after a time of A2*T2, if a cell reselection operation condition is met, the UE performs a reselection operation from the first-system network cell to a second-system network cell again, so that the UE may be ensured to reside in the first-system network cell and perform a user service within a period of time even under the condition that the first-system network cell is weak in signal, and occurrence of the condition of unavailability of the user service caused by frequent cell reselections may be avoided.

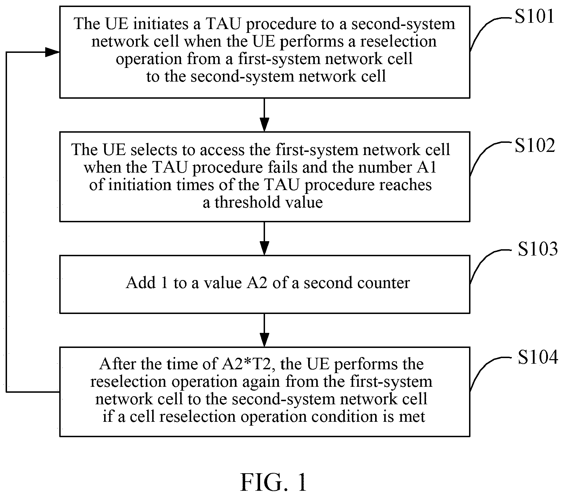

As shown in FIG. 1, an embodiment of the present invention discloses a network access method, which includes the following steps.

Step S101: when UE performs a reselection operation from a first-system network cell to a second-system network cell, the UE initiates a TAU procedure to the second-system network cell.

For example, a first-system network is a 3G network (such as a Universal Mobile Telecommunications System (UMTS) network), and a second-system network is a 4G network (such as an LTE network). A place where the UE is located is covered by both the 4G/3G networks, the UE is located in the UMTS network at first, and may receive an SIB19 message in the network, and the SIB19 message includes cell reselection information of a frequency point, priority and the like of an LTE cell.

When signal quality of the UMTS network gets poor, the UE may measure signal quality of the LTE cell according to the cell reselection information in the SIB19, and if the signal quality of the LTE cell is higher than a measurement threshold, a cell reselection operation may be performed for reselection from a UMTS cell to the LTE cell. The process is definitely specified in 3GPP 24.301, and will not be elaborated.

After reselection from the UMTS cell to the LTE cell, the UE may perform a TAU procedure for registration in the LTE cell.

Step S102: when the TAU procedure fails and a number A1 of initiation times of the TAU procedure reaches a threshold value, the UE selects to access the first-system network cell.

When the UE reselects the LTE cell instead of the UMTS and initiates the TAU procedure, the TAU procedure may not succeed for a cause such as a network deployment error of a network side. When the TAU procedure fails, the TAU procedure may be reinitiated, and when the number A1 of initiation times of the TAU procedure reaches the threshold value, the UE selects to access the first-system network cell.

Step S103: 1 is added to a value A2 of a second counter which is started, the second counter being arranged to record a number of times for which the number A1 of initiation times of the TAU procedure reaches the threshold value, herein a value added to the value A2 of the second counter every time may be a set value (defined into a first preset value in the embodiment), addition of any integer, such as 1, but not limited to 1, is taken as an example in the embodiment, and for example, values such as 2 and 3 may also be added.

Step S104: after a time of A2*T2, if a cell reselection operation condition is met, the UE performs the reselection operation from the first-system network cell to the second-system network cell again, T2 being a value of a second timer; and Step S101 is re-executed until the TAU procedure is successfully initiated.

In the embodiment, the second counter and the second timer are additionally arranged in the UE, the value of the second counter is A2, the value of the second timer is T2, the second counter is started after the UE selects to access the first-system network cell, and the second counter is arranged to record the number of times for which the number A1 of initiation times of the TAU procedure reaches the threshold value.

After the time of A2*T2, if the cell reselection operation condition is met, the UE performs the reselection operation from the first-system network cell to the second-system network cell again.

The abovementioned process is repeated until the TAU procedure is successfully initiated.

By the abovementioned solution of the embodiment, the second counter and the second timer are introduced, and the UE may reside in a previous-system network cell (such as a 3G or 2G cell) to perform a user service for a period of time after the TAU procedure fails, and then tries to perform the TAU procedure in a second-system cell (such as a 4G cell), thereby avoiding the problem that user services are unavailable because the UE is in a no service state for a long time, which is caused by frequent cell reselections due to failure of the TAU procedure.

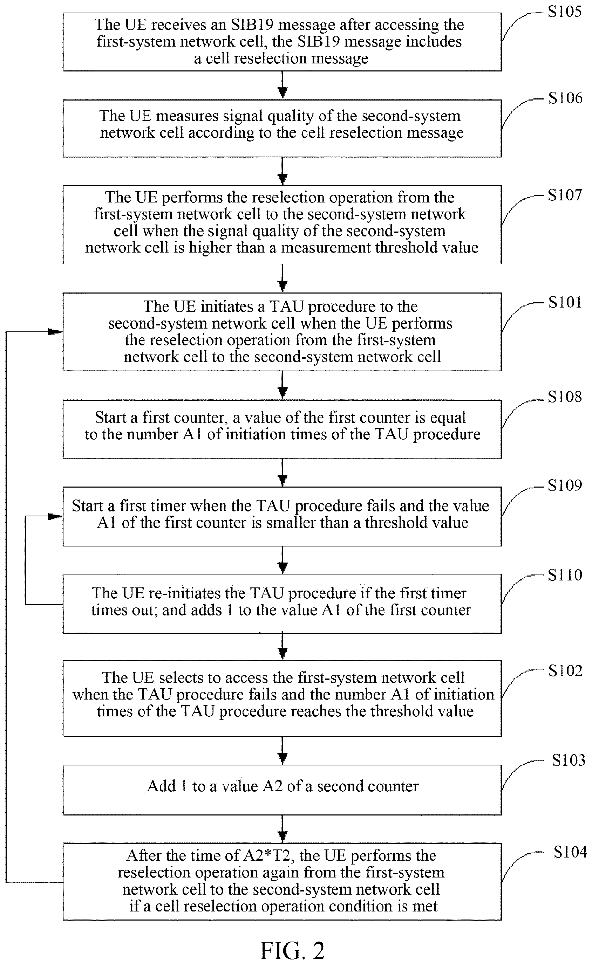

As shown in FIG. 2, another embodiment of the present invention discloses a network access method. On the basis of the abovementioned embodiment shown in FIG. 1, before the abovementioned Step S101, the method further includes:
Step S105: the UE receives an SIB19 message after accessing the first-system network cell, the SIB19 message including a cell reselection message;
Step S106: the UE measures signal quality of the second-system network cell according to the cell reselection message; and
Step S107: when the signal quality of the second-system network cell is higher than a measurement threshold value, the UE performs the reselection operation from the first-system network cell to the second-system network cell.

In addition, after the abovementioned Step S101, the method further includes:
Step S108: a first counter is started, a value of the first counter being equal to the number A1 of initiation times of the TAU procedure;
Step S109: when the TAU procedure fails and the value A1 of the first counter is smaller than a threshold value, a first timer is started;
Step S110: if the first timer times out, the UE reinitiates the TAU procedure; and 1 is added to the value A1 of the first counter, and Step S109 is re-executed until the value A1 of the first counter reaches the threshold value.

A difference between the embodiment and the abovementioned embodiment shown in FIG. 1 is that the embodiment further includes a solution that the UE performs the reselection operation from the first-system network cell to the second-system network cell and a processing solution before the UE selects to access the first-system network cell after the TAU procedure fails.

Specifically, a 3G network is, for example, a UMTS network, same to a target network of another system.

A place where the UE is located is covered by both 4G/3G networks, the UE is located in the UMTS network at first, and may receive an SIB19 message in the network, and the SIB19 message includes cell reselection information of a frequency point, priority and the like of an LTE cell. When signal quality of the UMTS network gets poor, the UE may measure signal quality of the LTE cell according to the cell reselection information in the SIB19, and if the signal quality of the LTE cell is higher than a measurement threshold, a cell reselection operation may be performed for reselection from a UMTS cell to the LTE cell. The process is definitely specified in 3GPP 24.301, and will not be elaborated.

After reselection from the UMTS cell to the LTE cell, the UE may perform a TAU procedure for registration in the LTE cell. But for a cause such as a network deployment error of a network side, the UE may receive a TRACKIN AREA UPDATE ACCEPT message, and the message may include one of the following EMM CAUSEs:
#16 (MSC temporarily not reachable), #17 (Network failure), or #22 (Congestion).

A TAU try counter, called a first counter A1 here, may be started in the UE according to a 3GPP specification, a T3411 timer (called a first timer in the embodiment) T1 may be started if a value of A1 is smaller than a set threshold value (for example, the threshold value is 5), and if the first timer T1 times out, the UE may reinitiate the TAU procedure; and if the value of A1 is equal to 5, the UE may select UMTS as an access technology for network access.

Since current signal quality of the UMTS cell is still very poor, a reselection operation over the LTE cell is reinitiated according to a cell reselection rule. In order to avoid such frequent cell reselections, a second counter A2 and a second timer T2 are added in the embodiment. Here, it is supposed that a value of the second timer T2 is 10min. The second counter A2 may record a number of times for which the first counter A1 is equal to 5. That is, if the value of A1 is equal to 5, the UE may select UMTS as the access technology, and at this moment, 1 may be added to a value of A2. Of course, addition of 1 to the value A1 of the second counter is taken as an example in the embodiment, a value added to the value A1 of the second counter every time may optionally be a set value (defined into a first preset value in the embodiment), addition of any integer, such as 1, but not limited to 1, is taken as an example in the embodiment, and for example, values such as 2 and 3 may also be added.

After the UE selects UMTS as the access technology for network access, an LTE cell reselection process may be performed again only after a time of at least A2*T2, and in the time of A2*T2, the UE may continue using UMTS for a user service.

By the abovementioned solution of the embodiment, the second counter and the second timer are introduced, and the UE may reside in a previous-system network cell (such as a 3G or 2G cell) to perform a user service for a period of time after the TAU procedure fails, and then tries to perform the TAU procedure in a second-system cell (such as a 4G cell), thereby avoiding the problem that user services are unavailable because the UE is in a no service state for a long time, which is caused by frequent cell reselections due to failure of the TAU procedure.

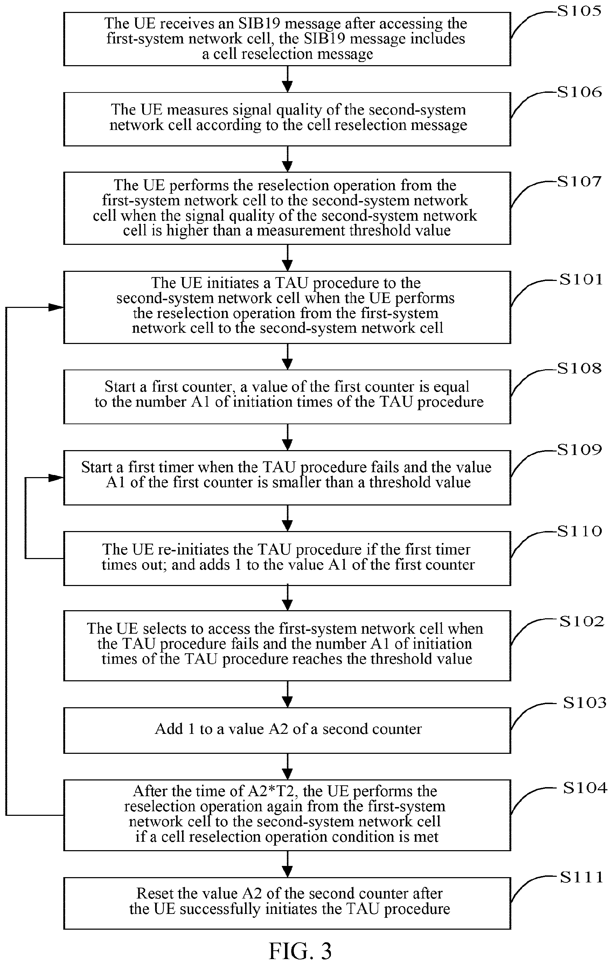

As shown in FIG. 3, another embodiment of the present invention discloses a network access method. On the basis of the abovementioned embodiment shown in FIG. 2, after the abovementioned Step S104, the method further includes:
Step S111: after the UE successfully initiates the TAU procedure, the value A2 of the second counter is reset.

A difference between the embodiment and the abovementioned embodiment shown in FIG. 2 is that the embodiment further includes a solution that the value A2 of the second counter is reset after the UE successfully initiates the TAU procedure.

The value A2 of the second counter may be reset after the UE may successfully perform the TAU procedure, that is, after the UE may be successfully registered in the 4G cell. Herein, the value A2 of the second counter is reset to facilitate next cell reselection operation.

It is important to further note that the value T2 of the second timer may have multiple value combinations, and for example, includes a first set time length and a second set time length, and the first set time length is smaller than the second set time length.

When the value A2 of the first counter is smaller than a first set value, the value T2 of the second timer adopts the first set time length; and when the value A2 of the first counter is larger than or equal to the first set value, the value T2 of the second timer adopts the second set time length.

For example:
the value T2 of the second timer may be a value set {10min, 20min}, and if the value of the second counter A2 is smaller than 5, the UE may perform the LTE cell reselection process again only after a time of at least 10min after selecting UMTS as the access technology for network access; and after the value of the second counter A2 is larger than or equal to 5, the UE may perform the LTE cell reselection process again only after a time of at least 100min after selecting UMTS as the access technology for network access.

The abovementioned process may ensure that the UE may reside in the UMTS cell and perform the user service within a period of time even under the condition that the UMTS cell is weak in signal, occurrence of the condition of unavailability of user services caused by frequent cell reselections is avoided, and better user experiences are provided.

The solution of the embodiment will be elaborated below with two examples that the value T2 of the second timer is a fixed value 10min and is the value set {10min, 20min} respectively.

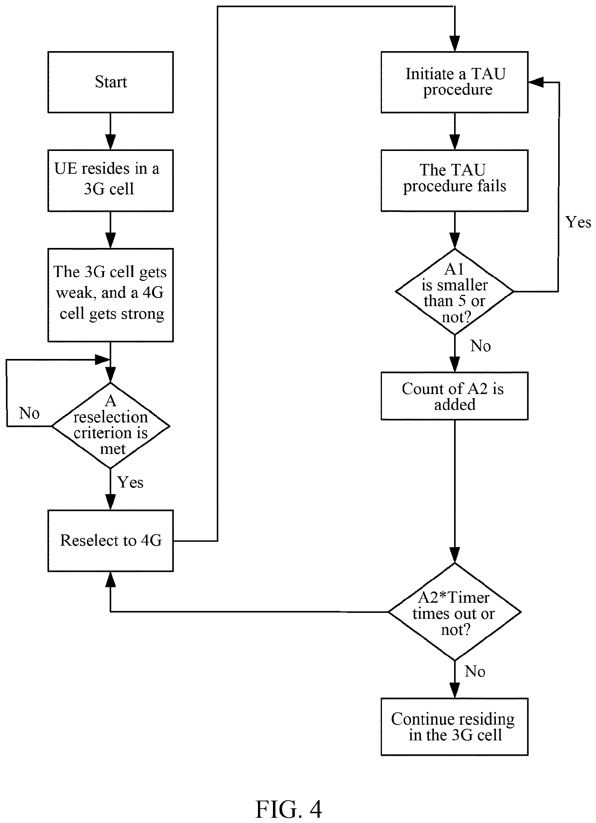

Example 1 (T2 is the fixed value 10min, as shown in FIG. 4)

The solution includes the following steps.

Step one: UE resides in a 3G cell.

Step two: in a current scenario, a signal of the 3G cell gets weak, and a signal of a 4G cell gets strong.

Step three: if a cell reselection standard is met, Step four is continued; otherwise Step two is continued.

Step four: the cell reselection standard is met, and the UE reselects the 4G cell.

Step five: the UE initiates a TAU procedure to be registered in the 4G cell, a network side transmits a TRACKING AREA UPDATE ACCEPT message, the message may include one of the following EMM CAUSEs:
#16 (MSC temporarily not reachable), #17 (Network failure), or #22 (Congestion), and the TAU procedure fails.

Step six: a Counter A1 is started in the UE, 1 is added, and if a value of A1 is judged to be smaller than 5, Step five is continued; and if the value of A1 is equal to 5, Step seven is continued.

Step seven: the UE selects the 3G cell, and resides, a Counter A2 is started in the UE, and 1 is added; meanwhile, there is internally a Timer with a preset value; and UE is required to reside in the 3G cell for a time of at least A2*Timer.

Step eight: if A2*Timer is exceeded, a cell reselection operation is performed; otherwise the UE continues residing in the 3G cell.

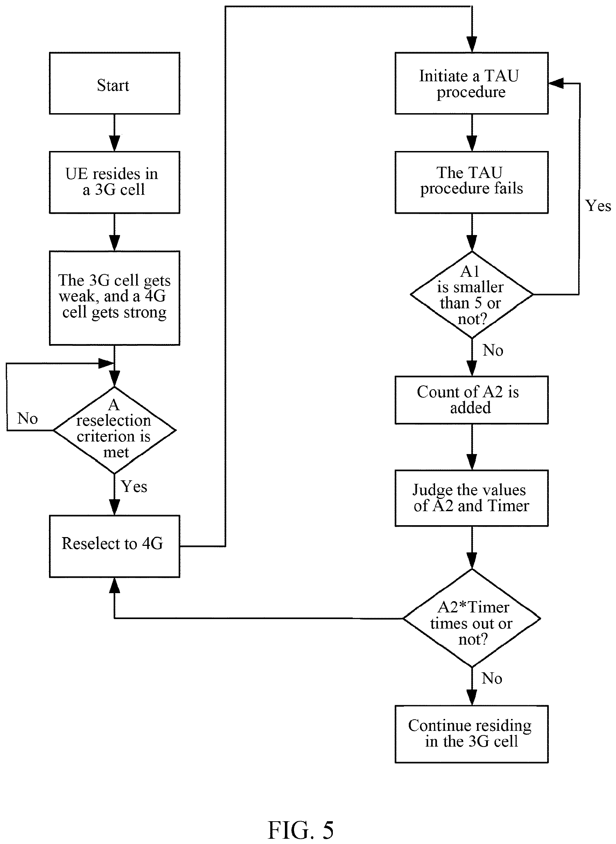

Example 2 (T2 is the value set {10min, 20min}, as shown in FIG. 5)

Step one: UE resides in a 3G cell.

Step two: in a current scenario, a signal of the 3G cell gets weak, and a signal of a 4G cell gets strong.

Step three: if a cell reselection standard is met, Step four is continued; otherwise Step two is continued.

Step four: the cell reselection standard is met, and the UE reselects the 4G cell.

Step five: the UE initiates a TAU procedure to be registered in the 4G cell, a network side transmits a TRACKING AREA UPDATE ACCEPT message, the message may include one of the following EMM CAUSEs:
#16 (MSC temporarily not reachable), #17 (Network failure), or #22 (Congestion), and the TAU procedure fails.

Step six: a Counter A1 is started in the UE, 1 is added, and if a value of A1 is judged to be smaller than 5, Step five is continued; and if the value of A1 is equal to 5, Step seven is continued.

Step seven: the UE selects the 3G cell, and resides, a Counter A2 is started in the UE, and 1 is added; meanwhile, there is internally a Timer with a preset value set; and a value of the Timer is selected from the set according to whether a value of A2 is smaller than 5 or not, and UE is required to reside in the 3G cell for a time of at least A2*Timer.

Step eight: if A2*Timer is exceeded, a cell reselection operation is performed; otherwise the UE continues residing in the 3G cell.

According to the network access method and UE of the embodiment of the present invention, the second counter and the second timer are introduced, and he UE may reside in a previous-system network cell (such as a 3G or 2G cell) to perform a user service for a period of time after the TAU procedure fails, and then tries to perform the TAU procedure in a second-system cell (such as a 4G cell), thereby avoiding the problem that user services are unavailable because the UE is in a no service state for a long time, which is caused by frequent cell reselections due to failure of the TAU procedure.

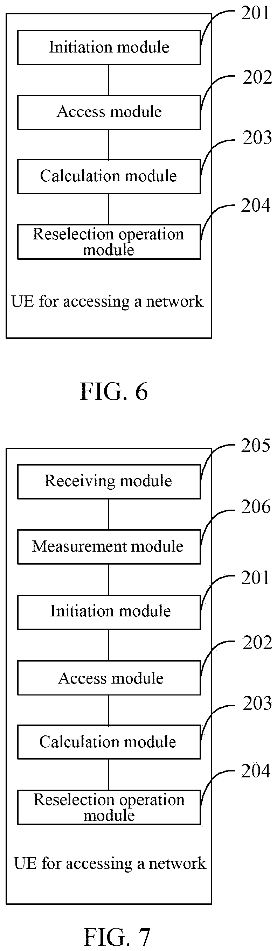

Corresponding to the abovementioned method embodiment, as shown in FIG. 6, an embodiment of UE accessing a network in the present invention is disclosed. The UE includes: an initiation module 201, an access module 202, a calculation module 203 and a reselection operation module 204, herein:
the initiation module 201 is arranged to, when the UE performs a reselection operation from a first-system network cell to a second-system network cell, initiate a TAU procedure to the second-system network cell;
the access module 202 is arranged to, when the TAU procedure fails and a number A1 of initiation times of the TAU procedure reaches a threshold value, select to access the first-system network cell;
the calculation module 203 is arranged to add 1 to a value A2 of a second counter which is started, the second counter being arranged to record a number of times for which the number A1 of initiation times of the TAU procedure reaches the threshold value, herein a value added to the value A2 of the second counter every time may be a set value (defined into a first preset value in the embodiment), addition of any integer, such as 1, but not limited to 1, is taken as an example in the embodiment, and for example, values such as 2 and 3 may also be added;
the reselection operation module 204 is arranged to, after a time of A2*T2, if a cell reselection operation condition is met, perform, by the UE, the reselection operation from the first-system network cell to the second-system network cell again, T2 being a value of a second timer; and such a cycle is repeated.

For example, a first-system network is a 3G network (such as a UMTS network), and a second-system network is a 4G network (such as an LTE network). A place where the UE is located is covered by both the 4G/3G networks, the UE is located in the UMTS network at first, and may receive an SIB19 message in the network, and the SIB19 message includes cell reselection information of a frequency point, priority and the like of an LTE cell.

When signal quality of the UMTS network gets poor, the UE may measure signal quality of the LTE cell according to the cell reselection information in the SIB19, and if the signal quality of the LTE cell is higher than a measurement threshold, a cell reselection operation may be performed for reselection from a UMTS cell to the LTE cell. The process is definitely specified in 3GPP 24.301, and will not be elaborated.

After reselection from the UMTS cell to the LTE cell, the UE may perform a TAU procedure for registration in the LTE cell.

When the UE reselects the LTE cell instead of the UMTS and initiates the TAU procedure, the TAU procedure may not succeed for a cause such as a network deployment error of a network side. When the TAU procedure fails, the TAU procedure may be reinitiated, and when the number A1 of initiation times of the TAU procedure reaches the threshold value, the UE selects to access the first-system network cell.

In the embodiment, the second counter and the second timer are additionally arranged in the UE, the value of the second counter is A2, the value of the second timer is T2, the second counter is started after the UE selects to access the first-system network cell, and the second counter is arranged to record the number of times for which the number A1 of initiation times of the TAU procedure reaches the threshold value.

After the time of A2*T2, if the cell reselection operation condition is met, the UE performs the reselection operation from the first-system network cell to the second-system network cell again.

The abovementioned process is repeated until the TAU procedure is successfully initiated.

By the abovementioned solution of the embodiment, the second counter and the second timer are introduced, and the UE may reside in a previous-system network cell (such as a 3G or 2G cell) to perform a user service for a period of time after the TAU procedure fails, and then tries to perform the TAU procedure in a second-system cell (such as a 4G cell), thereby avoiding the problem that user services are unavailable because the UE is in a no service state for a long time, which is caused by frequent cell reselections due to failure of the TAU procedure.

As shown in FIG. 7, another embodiment of the present invention discloses UE accessing a network. On the basis of the abovementioned embodiment shown in FIG. 6, UE further includes:
a receiving module 205, arranged to receive an SIB19 message after accessing the first-system network cell, the SIB19 message including a cell reselection message;
a measurement module 206, arranged to measure signal quality of the second-system network cell according to the cell reselection message; and
the reselection operation module 204 is further arranged to, when the signal quality of the second-system network cell is higher than a measurement threshold value, perform the reselection operation from the first-system network cell to the second-system network cell.

A difference between the embodiment and the abovementioned embodiment shown in FIG. 6 is that the embodiment further includes a solution that the UE performs the reselection operation from the first-system network cell to the second-system network cell and a processing solution before the UE selects to access the first-system network cell after the TAU procedure fails.

Specifically, a 3G network is, for example, a UMTS network, the similar principle is for a target network with another system.

A place where the UE is located is covered by both 4G/3G networks, the UE is located in the UMTS network at first, and may receive an SIB19 message in the network, and the SIB19 message includes cell reselection information of a frequency point, priority and the like of an LTE cell. When signal quality of the UMTS network gets poor, the UE may measure signal quality of the LTE cell according to the cell reselection information in the SIB19, and if the signal quality of the LTE cell is higher than a measurement threshold, a cell reselection operation may be performed for reselection from a UMTS cell to the LTE cell. The process is definitely specified in 3GPP 24.301, and will not be elaborated.

After reselection from the UMTS cell to the LTE cell, the UE may perform a TAU procedure for registration in the LTE cell. But for a cause such as a network deployment error of a network side, the UE may receive a TRACKIN AREA UPDATE ACCEPT message, and the message may include one of the following EMM CAUSEs:
#16 (MSC temporarily not reachable), #17 (Network failure), or #22 (Congestion).

A TAU try counter, called a first counter A1 here, may be started in the UE according to a 3GPP specification, a T3411 timer (called a first timer in the embodiment) T1 may be started if a value of A1 is smaller than a set threshold value (for example, the threshold value is 5), and if the first timer T1 times out, the UE may reinitiate the TAU procedure; and if the value of A1 is equal to 5, the UE may select UMTS as an access technology for network access.

Since current signal quality of the UMTS cell is still very poor, a reselection operation over the LTE cell is reinitiated according to a cell reselection rule. In order to avoid such frequent cell reselections, a second counter A2 and a second timer T2 are added in the embodiment. Here, it is supposed that a value of the second timer T2 is 10min. The second counter A2 may record a number of times for which the first counter A1 is equal to 5. That is, if the value of A1 is equal to 5, the UE may select UMTS as the access technology, and at this moment, 1 may be added to a value of A2. Of course, addition of 1 to the value A1 of the second counter is taken as an example in the embodiment, a value added to the value A1 of the second counter every time may optionally be a set value (defined into a second preset value in the embodiment), addition of any integer, such as 1, but not limited to 1, is taken as an example in the embodiment, and for example, values such as 2 and 3 may also be added.

After the UE selects UMTS as the access technology for network access, an LTE cell reselection process may be performed again only after a time of at least A2*T2, and in the time of A2*T2, the UE may continue using UMTS for a user service.

By the abovementioned solution of the embodiment, the second counter and the second timer are introduced, and the UE may reside in a previous-system network cell (such as a 3G or 2G cell) to perform a user service for a period of time after the TAU procedure fails, and then tries to perform the TAU procedure in a second-system cell (such as a 4G cell), thereby avoiding the problem that user services are unavailable because the UE is in a no service state for a long time, which is caused by frequent cell reselections due to failure of the TAU procedure.

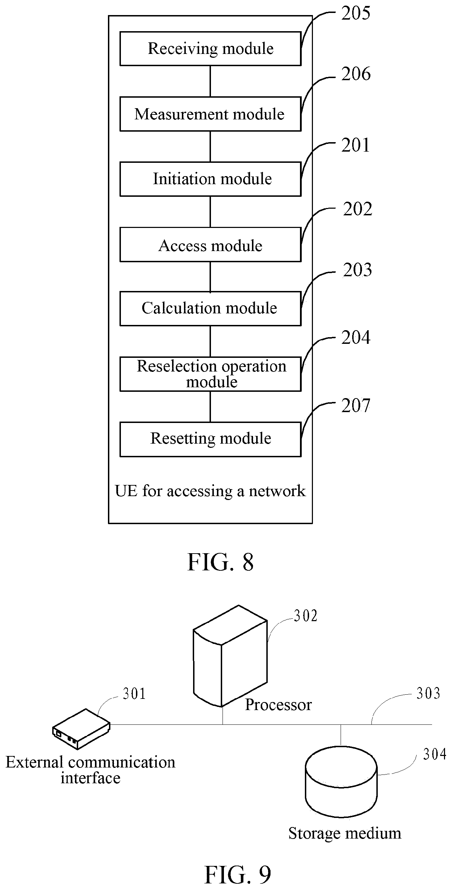

As shown in FIG. 8, another embodiment of the present invention discloses UE accessing a network. On the basis of the abovementioned embodiment shown in FIG. 7, the UE further includes:
a resetting module 207, arranged to, after the UE successfully initiates the TAU procedure, reset the value A2 of the second counter.

A difference between the embodiment and the abovementioned embodiment shown in FIG. 7 is that the embodiment further includes a solution that the value A2 of the second counter is reset after the UE successfully initiates the TAU procedure.

The value A2 of the second counter may be reset after the UE may successfully perform the TAU procedure, that is, after the UE may be successfully registered in the 4G cell. Herein, the value A2 of the second counter is reset to facilitate next cell reselection operation.

It is important to further note that the value T2 of the second timer may have multiple value combinations, and for example, includes a first set time length and a second set time length, and the first set time length is smaller than the second set time length.

When the value A2 of the first counter is smaller than a first set value, the value T2 of the second timer adopts the first set time length; and when the value A2 of the first counter is larger than or equal to the first set value, the value T2 of the second timer adopts the second set time length.

For example:
the value T2 of the second timer may be a value set {10min, 20min}, and if the value of the second counter A2 is smaller than 5, the UE may perform the LTE cell reselection process again only after a time of at least 10min after selecting UMTS as the access technology for network access; and when the value of the second counter A2 is larger than or equal to 5, the UE may perform the LTE cell reselection process again only after a time of at least 100min after selecting UMTS as the access technology for network access.

The abovementioned process may ensure that the UE may reside in the UMTS cell and perform the user service within a period of time even under the condition that the UMTS cell is weak in signal, occurrence of the condition of unavailability of user services caused by frequent cell reselections is avoided, and better user experiences are provided.

The solution of the embodiment will be elaborated below with two examples that the value T2 of the second timer is a fixed value 10min and is the value set {10min, 20min} respectively.

Example 1 (T2 is the fixed value 10min, as shown in FIG. 4)

The solution includes the following steps.

Step one: UE resides in a 3G cell.

Step two: in a current scenario, a signal of the 3G cell gets weak, and a signal of a 4G cell gets strong.

Step three: if a cell reselection standard is met, Step four is continued; otherwise Step two is continued.

Step four: the cell reselection standard is met, and the UE reselects the 4G cell.

Step five: the UE initiates a TAU procedure to be registered in the 4G cell, a network side transmits a TRACKING AREA UPDATE ACCEPT message, the message may include one of the following EMM CAUSEs:
#16 (MSC temporarily not reachable), #17 (Network failure), or #22 (Congestion), and the TAU procedure fails.

Step six: a Counter A1 is started in the UE, 1 is added, and if a value of A1 is judged to be smaller than 5, Step five is continued; and if the value of A1 is equal to 5, Step seven is continued.

Step seven: the UE selects the 3G cell, and resides, a Counter A2 is started in the UE, and 1 is added; meanwhile, there is internally a Timer with a preset value; and UE is required to reside in the 3G cell for a time of at least A2*Timer.

Step eight: if A2*Timer is exceeded, a cell reselection operation is performed; otherwise the UE continues residing in the 3G cell.

Example 2 (T2 is the value set {10min, 20min}, as shown in FIG. 5)

Step one: UE resides in a 3G cell.

Step two: in a current scenario, a signal of the 3G cell gets weak, and a signal of a 4G cell gets strong.

Step three: if a cell reselection standard is met, Step four is continued; otherwise Step two is continued.

Step four: the cell reselection standard is met, and the UE reselects the 4G cell.

Step five: the UE initiates a TAU procedure to be registered in the 4G cell, a network side transmits a TRACKING AREA UPDATE ACCEPT message, the message may include one of the following EMM CAUSEs:
#16 (MSC temporarily not reachable), #17 (Network failure), or #22 (Congestion), and the TAU procedure fails.

Step six: a Counter A1 is started in the UE, 1 is added, and if a value of A1 is judged to be smaller than 5, Step five is continued; and if the value of A1 is equal to 5, Step seven is continued.

Step seven: the UE selects the 3G cell, and resides, a Counter A2 is started in the UE, and 1 is added; meanwhile, there is internally a Timer with a preset value set; and a value of the Timer is selected from the set according to whether a value of A2 is smaller than 5 or not, and UE is required to reside in the 3G cell for a time of at least A2*Timer.

Step eight: if A2*Timer is exceeded, a cell reselection operation is performed; otherwise the UE continues residing in the 3G cell.

According to the network access method and UE of the embodiment of the present invention, the second counter and the second timer are introduced, and the UE may reside in a previous-system network cell (such as a 3G or 2G cell) to perform a user service for a period of time after the TAU procedure fails, and then tries to perform the TAU procedure in a second-system cell (such as a 4G cell), thereby avoiding the problem that user services are unavailable because the UE is in a no service state for a long time, which is caused by frequent cell reselections due to failure of the TAU procedure.

The embodiment of the present invention also records a computer storage medium, a computer-executable instruction is stored in the computer storage medium, and the computer-executable instruction is arranged to execute at least one of the methods in the embodiment of the present invention, specifically at least one of the methods shown in FIG. 1 to FIG. 5; and the computer storage medium may specifically be a storage medium such as a U disk, an optical disk or a magnetic disk, and is preferably a non-transitory storage medium.

As shown in FIG. 9, the embodiment also provides UE accessing a network, and the UE includes a processor 302, a storage medium 304 and at least one external communication interface 301; and the processor 302, the storage medium 304 and the external communication interface 301 are all connected through a bus 303. The processor 302 may be an electronic component with a processing function such as a micro processing unit, a central processing unit, a digital signal processor or a programmable logic array. A computer-executable instruction is stored in the storage medium.

The processor reads and runs the computer-executable instruction in the storage medium 304, and may execute at least one of the method in a first aspect of the embodiment of the present invention.

The above is only the alternative embodiment of the present invention and not intended to limit the scope of protection of the present invention. All modifications made according to the principle of the present invention shall fall within the scope of protection of the present invention.

## Claims

1. A network access method, **characterized by** comprising:
initiating (S101), by a User Equipment, UE, a Tracking Area Updating, TAU, procedure to a second-system network cell when the UE performs a reselection operation from a first-system network cell to the second-system network cell;
selecting (S102), by the UE, to access the first-system network cell when the TAU procedure fails and the number of initiation times of the TAU procedure reaches a threshold value;
adding (S103) a first preset value to a value of a second counter which is started, wherein the second counter is arranged to record the number of times for which the number of initiation times of the TAU procedure reaches the threshold value; and
after time of a product of the value of the second counter and a value of a second timer, performing (S104), by the UE, the reselection operation from the first-system network cell to the second-system network cell again if a cell reselection operation condition is met;
before the step of selecting, by the UE, to access the first-system network cell when the TAU procedure fails and the number of initiation times of the TAU procedure reaches the threshold value, further comprising:
starting (S108) a first counter, wherein a value of the first counter is equal to the number of initiation times of the TAU procedure;
starting (S109) a first timer when the TAU procedure fails and the value of the first counter is smaller than a threshold value; and
re-initiating (S110), by the UE, the TAU procedure if the first timer times out; adding (S110) a second preset value to the value of the first counter, and repeating the previous step.

2. The method according to claim 1, before the step of initiating, by the UE, the TAU procedure at an interval to the second-system network cell, further comprising:
receiving (S105), by the UE, a System Information Block, SIB19, message after accessing the first-system network cell, wherein the SIB19 message comprises a cell reselection message;
measuring (S106), by the UE, signal quality of the second-system network cell according to the cell reselection message; and
performing (S107), by the UE, the reselection operation from the first-system network cell to the second-system network cell when the signal quality of the second-system network cell is higher than a measurement threshold value.

3. The method according to claim 1, further comprising:
resetting (S111) the value of the second counter after the UE successfully initiates the TAU procedure.

4. The method according to claim 1, wherein, values of the second timer are a set which at least comprises a first set time length and a second set time length, and the first set time length is smaller than the second set time length;
when a value of a first counter is smaller than a first set value, the value of the second timer adopts the first set time length; and
when the value of the first counter is larger than or equal to the first set value, the value of the second timer adopts the second set time length.

5. A user equipment, UE, for accessing a network, **characterized by** comprising:
an initiation module (201), arranged to initiate a Tracking Area Updating, TAU, procedure to a second-system network cell when the UE performs a reselection operation from a first-system network cell to the second-system network cell;
an access module (202), arranged to select to access the first-system network cell when the TAU procedure fails and the number of initiation times of the TAU procedure reaches a threshold value;
a calculation module (203), arranged to add a first preset value to a value of a second counter which is started, wherein the second counter is arranged to record the number of times for which the number of initiation times of the TAU procedure reaches the threshold value; and
a reselection operation module (204), arranged to, after time of a product of the value of the second counter and a value of a second timer, perform, by the UE, the reselection operation from the first-system network cell to the second-system network cell again if a cell reselection operation condition is met;
further comprising:
a counter starting module, arranged to start a first counter, wherein a value of the first counter is equal to the number of initiation times of the TAU procedure;
a timer starting module, arranged to start a first timer when the TAU procedure fails and the value of the first counter is smaller than a threshold value ;
the initiation module, further arranged to re-initiate the TAU procedure when the first timer times out; and, the calculation module, arranged to add a second preset value to the value of the first counter.

6. The UE according to claim 5, further comprising:
a receiving module (205), arranged to receive a System Information Block, SIB19, message after accessing the first-system network cell, wherein the SIB19 message comprises a cell reselection message;
a measurement module (206), arranged to measure signal quality of the second-system network cell according to the cell reselection message;
the reselection operation module, further arranged to perform the reselection operation from the first-system network cell to the second-system network cell when the signal quality of the second-system network cell is higher than a measurement threshold value.

7. The UE according to claim 5, further comprising:
a resetting module (207), arranged to reset the value of the second counter after the UE successfully initiates the TAU procedure.

8. The UE according to claim 5, wherein, values of the second timer are a set which at least comprises a first set time length and a second set time length, and the first set time length is smaller than the second set time length;
when a value of a first counter is smaller than a first set value, the value of the second timer adopts the first set time length; and
when the value of the first counter is larger than or equal to the first set value, the value of the second timer adopts the second set time length.

9. A computer storage medium (304), storing computer-executable instructions, **characterized in that**, the computer-executable instructions are arranged to execute the method according to at least one of claims 1-4.

## Patentansprüche

1. Netzwerkzugangsverfahren, **dadurch gekennzeichnet, dass** dieses folgendes umfasst:
durch ein Teilnehmergerät (UE für User Equipment) Einleiten (S101) einer Tracking Area Updating(TAU)-Prozedur an eine zweite Systemnetzwerkzelle, wenn das UE eine Reselection-Operation von einer ersten Systemnetzwerkzelle zu der zweiten Systemnetzwerkzelle ausführt
durch das UE Auswählen (S102) des Zugangs zu der ersten Systemnetzwerkzelle, wenn die TAU-Prozedur fehlschlägt und die Anzahl der Einleitungen der TAU-Prozedur einen Schwellenwert erreicht;
Addieren (S103) eines ersten voreingestellten Werts zu einem Wert eines gestarteten zweiten Zählers, wobei der zweite Zähler so angeordnet ist, dass er die Häufigkeit aufzeichnet, mit der die Anzahl der Einleitungen der TAU-Prozedur den Schwellenwert erreicht; und
nach der Zeit eines Produkt des Werts des zweiten Zählers und einem Wert eines zweiten Timers das Ausführen (S104) durch das UE einer erneuten Reselection-Operation von der ersten Systemnetzwerkzelle zu der zweiten Systemnetzwerkzelle, wenn eine Bedingung für eine Zellen-Reselection-Operation erfüllt ist;
durch das UE vor dem Schritt des Auswählens den Zugang zu der ersten Systemnetzwerkzelle, wenn die TAU-Prozedur fehlschlägt und die Anzahl der Einleitungen der TAU-Prozedur den Schwellenwert erreicht; ferner umfassend:
Starten (S108) eines ersten Zählers, wobei ein Wert des ersten Zählers der Anzahl der Einleitungen der TAU-Prozedur entspricht;
Starten (S109) eines ersten Timers, wenn die TAU-Prozedur fehlschlägt und der Wert des ersten Zählers kleiner ist als ein Schwellenwert; und
durch das UE erneutes Einleiten (S110) der TAU-Prozedur, wenn der erste Timer abläuft; Addieren (S110) eines zweiten voreingestellten Werts zu dem Wert des ersten Zählers und Wiederholen des vorherigen Schritts.

2. Verfahren nach Anspruch 1, ferner umfassend vor dem Schritt des Einleitens der TAU-Prozedur durch das UE in einem Intervall an die zweite Systemnetzwerkzelle:
durch das UE Empfangen (S105) einer System Information Block(SIB19)-Nachricht nach dem Zugang zu der ersten Systemnetzwerkzelle, wobei die SIB19-Nachicht eine Zellen-Reselection-Nachricht umfasst;
durch das UE Messen (S106) der Signalqualität der zweiten Systemnetzwerkzelle gemäß der Zellen-Reselection-Nachricht; und
durch das UE Ausführen (S107) der Reselection-Operation von der ersten Systemnetzwerkzelle zu der zweiten Systemnetzwerkzelle, wenn die Signalqualität der zweiten Systemnetzwerkzelle höher ist als ein Messschwellenwert.

3. Verfahren nach Anspruch 1, ferner umfassend:
Zurücksetzen (S111) des Werts des zweiten Zählers, nachdem das UE die TAU-Prozedur erfolgreich eingeleitet hat.

4. Verfahren nach Anspruch 1, wobei die Werte des zweiten Timers eine Gruppe sind, die wenigstens eine erste festgelegte Zeitdauer und eine zweite festgelegte Zeitdauer umfassen, und wobei die erste festgelegte Zeitdauer kleiner ist als die zweite festgelegte Zeitdauer;
wobei, wenn ein Wert eines ersten Zählers kleiner ist ein erster festgelegter Wert, der Wert des zweiten Timers die erste festgelegte Zeitdauer annimmt; und
wobei, wenn der Wert des ersten Zählers größer oder gleich dem ersten festgelegten Wert ist, der Wert des zweiten Timers die zweite festgelegte Zeitdauer annimmt.

5. Teilnehmergerät (UE für User Equipment) für den Zugang zu einem Netzwerk, **dadurch gekennzeichnet, dass** es folgendes umfasst:
ein Einleitungsmodul (201), das so angeordnet ist, dass es eine Tracking Area Updating(TAU)-Prozedur an eine zweite Systemnetzwerkzelle einleitet, wenn das UE eine Reselection-Operation von einer ersten Systemnetzwerkzelle zu der zweiten Systemnetzwerkzelle ausführt
ein Zugangsmodul (202), das so angeordnet ist, dass es den Zugang zu der ersten Systemnetzwerkzelle auswählt, wenn die TAU-Prozedur fehlschlägt und die Anzahl der Einleitungen der TAU-Prozedur einen Schwellenwert erreicht;
ein Berechnungsmodul (203), das so angeordnet ist, dass es einen ersten voreingestellten Wert zu einem Wert eines gestarteten zweiten Zählers addiert, wobei der zweite Zähler so angeordnet ist, dass er die Häufigkeit aufzeichnet, mit der die Anzahl der Einleitungen der TAU-Prozedur den Schwellenwert erreicht; und
ein Reselection-Operations-Modul (204), das so angeordnet ist, dass es nach der Zeit eines Produkt des Werts des zweiten Zählers und einem Wert eines zweiten Timers durch das UE die Reselection-Operation von der ersten Systemnetzwerkzelle zu der zweiten Systemnetzwerkzelle erneut ausführt, wenn eine Bedingung für eine Zellen-Reselection-Operation erfüllt ist;
ferner umfassend:
ein Zählerstartmodul, das so angeordnet ist, dass es einen ersten Zähler startet, wobei ein Wert des ersten Zählers der Anzahl der Einleitungen der TAU-Prozedur entspricht;
ein Timer-Startmodul, das so angeordnet ist, dass es einen ersten Timer startet, wenn die TAU-Prozedur fehlschlägt und der Wert des ersten Zählers kleiner ist als ein Schwellenwert;
wobei das Einleitungsmodul ferner so angeordnet ist, dass es die TAU-Prozedur erneut einleitet, wenn der erste Timer abläuft; und wobei das Berechnungsmodul so angeordnet ist, dass es einen zweiten voreingestellten Wert zu dem Wert des ersten Zählers addiert.

6. UE nach Anspruch 5, ferner umfassend:
ein Empfangsmodul (205), das so angeordnet ist, dass es eine System Information Block(SIB19)-Nachricht nach dem Zugang zu der ersten Systemnetzwerkzelle empfängt, wobei die SIB19-Nachicht eine Zellen-Reselection-Nachricht umfasst;
ein Messmodul (206), das so angeordnet ist, dass es die Signalqualität der zweiten Systemnetzwerkzelle gemäß der Zellen-Reselection-Nachricht misst;
wobei das Reselection-Operations-Modul ferner so angeordnet ist, dass es die Reselection-Operation von der ersten Systemnetzwerkzelle zu der zweiten Systemnetzwerkzelle ausführt, wenn die Signalqualität der zweiten Systemnetzwerkzelle höher ist als ein Messschwellenwert.

7. UE nach Anspruch 5, ferner umfassend:
ein Rücksetzmodul (207), das so angeordnet ist, dass es den Wert des zweiten Zählers zurücksetzt, nachdem das UE die TAU-Prozedur erfolgreich eingeleitet hat.

8. UE nach Anspruch 5, wobei die Werte des zweiten Timers eine Gruppe sind, die wenigstens eine erste festgelegte Zeitdauer und eine zweite festgelegte Zeitdauer umfassen, und wobei die erste festgelegte Zeitdauer kleiner ist als die zweite festgelegte Zeitdauer;
wobei, wenn ein Wert eines ersten Zählers kleiner ist ein erster festgelegter Wert, der Wert des zweiten Timers die erste festgelegte Zeitdauer annimmt; und
wobei, wenn der Wert des ersten Zählers größer oder gleich dem ersten festgelegten Wert ist, der Wert des zweiten Timers die zweite festgelegte Zeitdauer annimmt.

9. Computerspeichermedium (304), das durch einen Computer ausführbare Befehle speichert, **dadurch gekennzeichnet, dass** die durch einen Computer ausführbaren Befehle so angeordnet sind, dass sie das Verfahren nach wenigstens einem der Ansprüche 1 bis 4 ausführen.

## Revendications

1. Procédé d'accès au réseau, **caractérisé en ce qu'**il comprend les étapes consistant à :
lancer (S101), par un équipement utilisateur, UE, une procédure de mise à jour de zone de suivi, TAU, sur une cellule de réseau de second système lorsque l'UE effectue une opération de resélection d'une cellule de réseau de premier système à la cellule de réseau de second système ;
sélectionner (S102), par l'UE, le fait d'accéder à la cellule de réseau de premier système lorsque la procédure TAU échoue et que le nombre de lancements de la procédure TAU atteint une valeur seuil ;
ajouter (S103) une première valeur prédéfinie à une valeur d'un second compteur qui est démarré, le second compteur étant conçu pour enregistrer le nombre de fois pour lequel le nombre de lancements de la procédure TAU atteint la valeur seuil ; et
après le temps d'un produit de la valeur du second compteur et d'une valeur d'un second minuteur, exécuter (S104), par l'UE, l'opération de resélection de la cellule de réseau de premier système à la cellule de réseau de second système à nouveau si une condition d'opération de resélection de cellule est remplie ;
avant l'étape de sélection, par l'UE, de l'accès à la cellule de réseau de premier système lorsque la procédure TAU échoue et que le nombre de lancements de la procédure TAU atteint la valeur seuil, comprenant en outre les étapes consistant à :
démarrer (S108) un premier compteur, une valeur du premier compteur étant égale au nombre de lancements de la procédure TAU ;
démarrer (S109) un premier minuteur lorsque la procédure TAU échoue et que la valeur du premier compteur est inférieure à une valeur seuil ; et
réinitialiser (S110), par l'UE, la procédure TAU si le premier minuteur est dépassé ; ajouter (S110) une seconde valeur prédéfinie à la valeur du premier compteur, et répéter l'étape précédente.

2. Procédé selon la revendication 1, avant l'étape de lancement, par l'UE, de la procédure TAU à un intervalle à la cellule de réseau de second système, comprenant en outre les étapes consistant à :
recevoir (S105), par l'UE, un message de bloc d'information système, SIB19, après avoir accédé à la cellule de réseau de premier système, le message SIB19 comprenant un message de resélection de cellule ;
mesurer (S106), par l'UE, la qualité de signal de la cellule de réseau de second système en fonction du message de resélection de cellule ; et
effectuer (S107), par l'UE, l'opération de resélection de la cellule de réseau de premier système à la cellule de réseau de second système lorsque la qualité de signal de la cellule de réseau de second système est supérieure à une valeur de seuil de mesure.

3. Procédé selon la revendication 1, comprenant en outre l'étape consistant à :
réinitialiser (S111) la valeur du second compteur après que l'UE a lancé avec succès la procédure TAU.

4. Procédé selon la revendication 1, les valeurs du second minuteur étant un ensemble qui comprend au moins une première durée définie et une seconde durée définie, et la première durée définie étant inférieure à la seconde durée définie ;
lorsqu'une valeur d'un premier compteur est inférieure à une première valeur définie, la valeur du second minuteur adoptant la première durée définie ; et
lorsque la valeur du premier compteur est supérieure ou égale à la première valeur définie, la valeur du second minuteur adoptant la seconde durée définie.

5. Équipement utilisateur, UE, pour accéder à un réseau, **caractérisé en ce qu'**il comprend :
un module de lancement (201), conçu pour lancer une procédure de mise à jour de zone de suivi, TAU, sur une cellule de réseau de second système lorsque l'UE effectue une opération de resélection d'une cellule de réseau de premier système à la cellule de réseau de second système ;
un module d'accès (202) conçu pour sélectionner le fait d'accéder à la cellule de réseau de premier système lorsque la procédure TAU échoue et que le nombre de lancements de la procédure TAU atteint une valeur seuil ;
un module de calcul (203) conçu pour ajouter une première valeur prédéfinie à une valeur d'un second compteur qui est démarré, le second compteur étant conçu pour enregistrer le nombre de fois pour lequel le nombre de lancements de la procédure TAU atteint la valeur seuil ; et
un module d'opération de resélection (204) conçu pour, après le temps d'un produit de la valeur du second compteur et d'une valeur d'un second minuteur, exécuter, par l'UE, l'opération de resélection de la cellule de réseau de premier système à la cellule de réseau de second système à nouveau si une condition d'opération de resélection de cellule est remplie ;
comprenant en outre :
un module de démarrage de compteur, conçu pour démarrer un premier compteur, une valeur du premier compteur étant égale au nombre de lancements de la procédure TAU ;
un module de démarrage de minuteur, conçu pour démarrer un premier minuteur lorsque la procédure TAU échoue et que la valeur du premier compteur est inférieure à une valeur seuil ;
le module de lancement, conçu en outre pour relancer la procédure TAU lorsque le premier minuteur expire ; et, le module de calcul, conçu pour ajouter une seconde valeur prédéfinie à la valeur du premier compteur.

6. UE selon la revendication 5, comprenant en outre :
un module de réception (205) conçu pour recevoir un message de bloc d'information système, SIB19, après avoir accédé à la cellule de réseau de premier système, le message SIB19 comprenant un message de resélection de cellule ;
un module de mesure (206), conçu pour mesurer la qualité de signal de la cellule de réseau de second système en fonction du message de resélection de cellule ;
le module d'opération de resélection, conçu en outre pour effectuer l'opération de resélection de la cellule de réseau de premier système à la cellule de réseau de second système lorsque la qualité de signal de la cellule de réseau de second système est supérieure à une valeur de seuil de mesure.

7. UE selon la revendication 5, comprenant en outre :
un module de réinitialisation (207) conçu pour réinitialiser la valeur du second compteur après que l'UE a lancé avec succès la procédure TAU.

8. UE selon la revendication 5, les valeurs du second minuteur étant un ensemble qui comprend au moins une première durée définie et une seconde durée définie, et la première durée définie étant inférieure à la seconde durée définie ;
lorsqu'une valeur d'un premier compteur est inférieure à une première valeur définie, la valeur du second minuteur adoptant la première durée définie ; et
lorsque la valeur du premier compteur est supérieure ou égale à la première valeur définie, la valeur du second minuteur adoptant la seconde durée définie.

9. Support de stockage informatique (304), stockant des instructions exécutables par ordinateur, **caractérisé en ce que** les instructions exécutables par ordinateur sont conçues pour exécuter le procédé selon au moins l'une des revendications 1 à 4.
